# EUROPEAN PATENT SPECIFICATION

(11) **EP 3 001 085 B1**
(45) Date of publication and mention of the grant of the patent: **05.07.2017**
(21) Application number: 14189343.8
(22) Date of filing: 17.10.2014
(51) Int. Cl.: F16L 19/08, F16L 33/22

(54) **Fitting for multilayer pipes and assembly method thereof**
Verbindungsstück für mehrlagige Rohre und Montageverfahren dafür
Raccord pour tuyaux à couches multiples et procédé d'assemblage de celui-ci

(30) Priority: 25.09.2014 IT MI20141675
(43) Date of publication of application: 30.03.2016
(73) Proprietor: Greiner S.p.A., 25065 Lumezzane (BS) (IT)
(72) Inventor: Lena, Roberto, I-25065 Lumezzane (BS) (IT); Astori, Giorgio, I-25065 Lumezzane (BS) (IT)
(74) Representative: Marietti, Andrea

(56) References cited:
- EP-A1- 2 045 502
- KR-Y1- 200 156 985
- US-A- 2 328 298
- US-A- 3 576 334

## Description

### FIELD OF INVENTION

The present invention relates to a fitting for multilayer pipes, in particular for connecting such multilayer pipes to other pipes or external systems, and the respective assembling process.

### BACKGROUND ART

Pipes for civil and/or industrial hydraulics, for example for the health care field or for heating, or intended for gas delivery, made of more or less deformable polymeric materials such as polyethylene, have long been available on the market. Generally, pipes made of polymeric materials are marketed with diameters ranging between 20 mm and 1600 mm, although for specific applications pipes are available with diameters larger or smaller with respect to the indicated range.

Recently, "multilayer" pipes, i.e. pipes made of alternate metal and polymer layers, due to higher mechanical resistance and reduced permeability to liquids compared to traditional polymeric pipes, found large use. A typical multilayer pipe, for example, is formed by two layers of plastic material, an inner and an outer one, having an aluminum layer in between (known as armoured multilayer).

Still by way of example, another market-available multilayer pipe is made of a central polyethylene layer, covered by a double aluminum band and protected by an outer polyolefin layer.

Multilayer pipes providing an inner polyethylene (PE) layer, an intermediate aluminum layer and an outer polypropylene (PP) layer, with the possible addition of quartz powder, are also known.

Conventionally, polymeric pipes are functionally connected to each other, or to external systems, by means of metal fittings usually made of brass, ADZ (antidezincification) brass, brass alloys, bronze, etc. Usually the pipes, in particular polyethylene ones, are connected by means of fittings known in the art as "press fittings", threaded clamping fittings, or compression fittings or "bicone" fittings (also providing welding).

In general, traditional fittings are configured so as to engage and radially seam the outer surface of the corresponding pipe from the outside, in cooperation with a bushing inserted inside the tube from one end thereof. A similar fitting is described, for example, in the International Patent Application WO 2005/012780.

Further pipe fittings are known from other documents, such as, for example, document FR 1 446 056 describing a releasable and re-usable fitting for multilayer pipes having an inner polymeric layer surrounded by a reinforcing layer of metal wire. The fitting comprises a body having a threaded inner portion adapted to engage a corresponding threaded portion of a tubular nipple being in its turn inserted in the pipe. A socket having a threaded inner portion engages a threading on the outer surface of the body to lock the pipe on the fitting. On the opposite end of the body a nut is fastened by means of a metal stop wire.

The document EP 2 045 502, in the name of the Applicant, describes a polymer or multilayer pipe fitting. The fitting comprises a main body having an externally barbed or threaded first portion, at least partially insertable within a pipe end, and a second abutting portion, designed to protrude outwards from the pipe end. The fitting further comprises a terminal member fittable on the second abutting portion thereof in order to connect more pipes or external circuits, and an element for clamping the connecting terminal member to the pipe and/or the main body, and an elastic element, for example a "Seeger"-type circlip (open or closed), placed between the second abutting portion and the connecting terminal member for permanent snap fit of the connecting terminal member to the main body of the fitting.

In some applications, multilayer pipes can be used to transport drinking water even passing through terrains that may be polluted or become vulnerable to contaminants in the course of time.

Therefore, it is considered important to improve the seal of such pipes in order to prevent the contaminants, possibly present in the terrain, from filtrating through the pipe fittings, thus coming even to pollute the drinking water.

This need is particularly felt also because the pipe portion, and in general the hydraulic circuit formed by the pipes, may be subject to so-called water hammers, which cause pressure to increase even tens of bar over the nominal pressure of the hydraulic circuit. In other words, as the pressure of the fluid flowing in the pipe increases, then risks for the bushing to take off from the respective pipe end significantly increase too, thereby causing the fitting to disengage and a fluid leakage in the system the pipe belongs to. If the fitting components displace from the proper connecting position, then the contaminants present in the terrain can infiltrate inside the pipe at the fitting.

It is therefore an object of the present invention to provide a pipe fitting and a process for assembling a multilayer pipe inside a pipe fitting providing an optimal hydraulic seal.

### SUMMARY OF THE INVENTION

The present invention achieves these and other objects by means of the pipe fitting according to the first independent claim and the following dependent claims.

In particular, an aspect of the present invention provides a process for assembling a multilayer pipe inside a pipe fitting, where the multilayer pipe has an intermediate layer preferably made of aluminum that is arranged between an outer layer and an inner layer preferably made of polymeric materials, where the process comprises at least the following steps:
- a) removing a portion of the outer layer of the pipe so that a portion of the intermediate layer made of aluminum at one end of the pipe and an edge of the outer layer of the pipe are both exposed;
- b) coupling the pipe with a barbed or threaded portion of a main body of the fitting;
- c) coupling irreversibly the main body of the fitting with a connecting terminal member;
- d) positioning a threaded element on the pipe;
- e) positioning a pipe-clamping ring outside of the pipe, in an intermediate position between the pipe itself and the threaded element;
- f) screwing the threaded element on the connecting threaded member to seam the pipe-clamping ring to the outer surface of the pipe and to lead the edge of the outer layer of the pipe to contact a gasket interposed between the exposed portion made of aluminum of the pipe and an inner surface of the connecting terminal member.

This solution has the advantage of optimally sealing the pipe inwardly by means of the seal of the gasket on the aluminum surface, which is particularly advantageous when the fitting is installed in polluted terrains.

The so-configured fitting therefore provides important anti-pollution properties, preventing pollutants from contaminating the drinking water flowing in the pipes. Further characteristics of the invention can be deduced from the dependent claims.

### BRIEF DESCRIPTION OF THE FIGURES

Further characteristics and advantages of the invention will become apparent from the following description given by way of non limiting example, with the aid of the figures illustrated in the attached drawings, in which:
- figure 1 is a side sectional view of a first embodiment of the pipe fitting of the invention with a multilayer pipe inserted in position;
- figure 2 is a side sectional view of the pipe fitting only of figure 1;
- figure 2A is a side sectional view of a further possible embodiment of the pipe fitting according to the invention;
- figure 3 is a side sectional view of a further possible embodiment of the pipe fitting of the invention with a multilayer pipe inserted in position.

### DETAILED DESCRIPTION OF SOME PREFERRED EMBODIMENTS OF THE PRESENT INVENTION

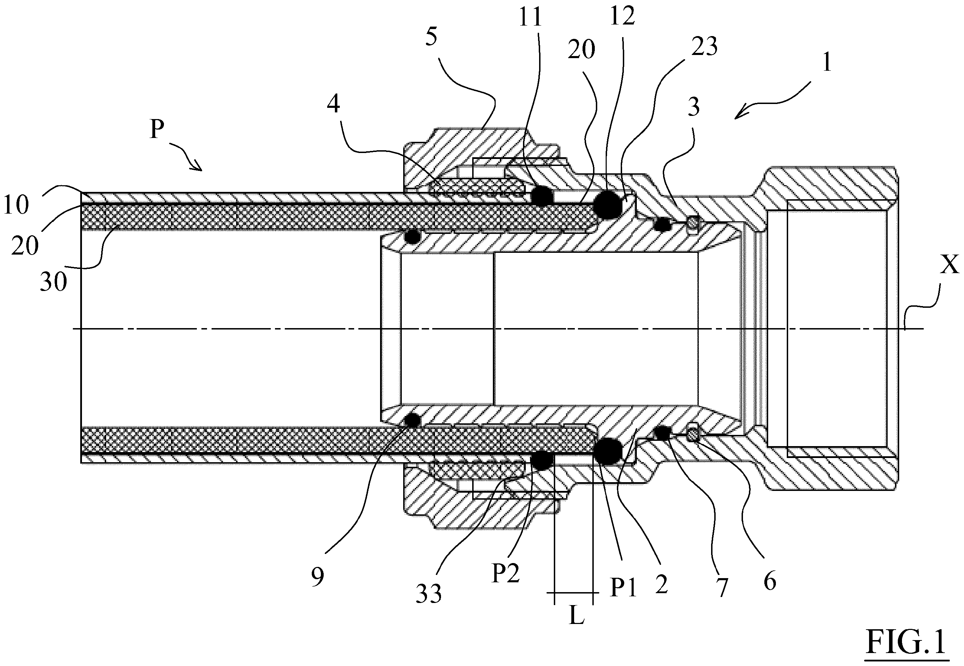

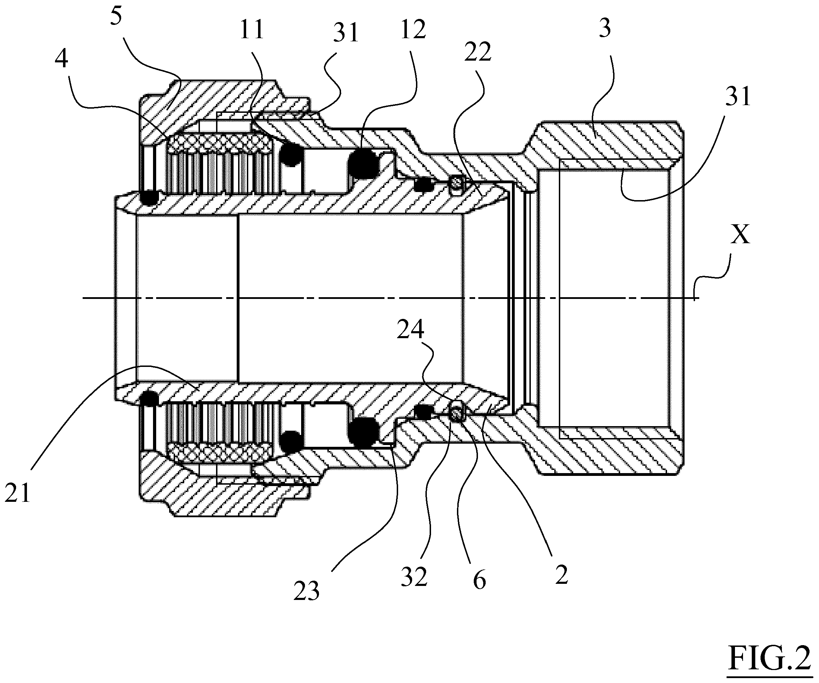

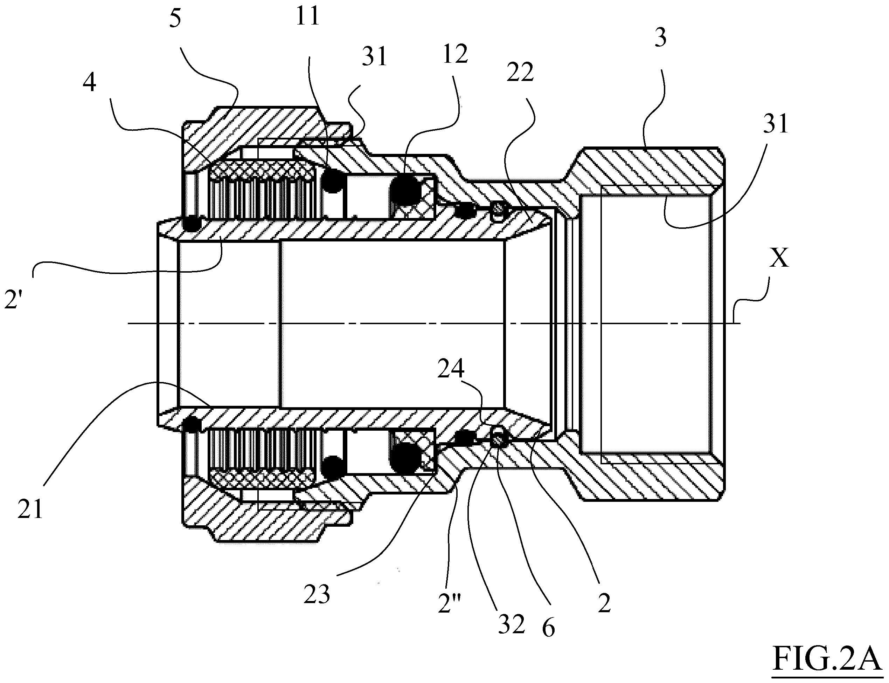

Referring first to figures 1, 2, 2A, a fitting 1 according to the present invention for connecting polymeric, multilayer (armoured) pipes to other pipes or external circuits, is shown. The fitting 1 can be applied to pipes delivering drinking water in terrains which could be polluted.

In particular, the fitting 1 can be applied to multilayer pipes, such as the pipe P providing an inner layer 30 made of polyethylene (PE), an intermediate layer 20 made of aluminum and an outer layer 10 made of polypropylene (PP). It should further be noted that, according to a possible embodiment, also the outer layer 10 can be made of polyethylene. Moreover, the layers 10, 20, 30 of the pipe P can be made of materials other than the mentioned ones.

The fitting 1 comprises, in its turn, a main body or bushing 2 provided with a first portion 21 which can be at least partly inserted in a free end of the pipe P, and a second portion 22 intended to be coupled to a connecting terminal member 3. Substantially, the first portion 21 and the second portion 22 of the main body 2 are separated by a wall 23 acting as a limit stop as the portion 21 is inserted in the respective pipe.

The section of the main body 2 of the fitting is substantially circular and is preferably made of metal, for example brass, or brass alloys, steel, or plastic material. The outer diameter of the first portion 21 of the main body 2 is such to allow forced insertion into the corresponding pipe, i.e. the outer diameter of the first portion 21 of the fitting is more or less equal to the inner diameter of the pipe P the fitting is applied to.

For this purpose, the first portion 21 of the main body 2 is provided on its outside with parallel barbed adapters or else it can be externally threaded, according to another possible embodiment.

In the embodiment shown in figure 2, the main body 2, or bushing, is made in one piece. However, according to a further possible embodiment shown for example in figure 2A, the main body 2 comprises two elements 2', 2".

In detail, the first element 2' has a tubular shape having a substantially constant outer diameter on which a second element 2", having a substantially circular shape (ring), is installed. The second element 2" is preferably slid on the outer surface of the first element 2'. As shown, for example, in figure 2A, the second element 2" is arranged between the first portion 21 and the second portion 22 of the main body 2 and forms the wall 23 acting as a limit stop as the portion 21 is inserted in the respective pipe. The second element 2" is preferably made of plastic material, such as nylon. It is further to be noticed that the second element 2", as well as the main body 2 made in one piece shown in figures 1 and 2, is conveniently shaped so as to support the gasket 12 substantially arranged at the stop wall 23 of the main body 2, as better explained hereinafter.

The fitting 1 further comprises a terminal member 3 for connecting other pipes, or external circuits, or different components. The connecting terminal member 3 can be constrained to the main body 2 of the fitting 1 and is provided with standard means for fastening to other fittings or circuits, for example is provided with a threaded portion 31. The connecting terminal member 3 is fittable on the second portion 22 of the main body 2 (and vice versa), i.e. it can slide thereon along a certain length. It is further provided a clamping element 5, for example a nut, operating for tightening the connecting terminal member 3 to the pipe P.

The fitting 1 further comprises a pipe-clamping ring 4 cooperating with the clamping element 5 so that the coupling of the fitting with the respective pipe is completed. The ring 4 is made of a plastic material, or metal, and is elastically deformable in radial direction. More precisely, the ring is preferably open (i.e. not closed) because of an "omitted" length: in fact it may have a cutting (or opening) subtending an angle, for example a 30° angle, or it can be obtained by a longitudinal cutting (that is parallel to the X axis in figures 1, 2, 2A) or by any other shape.

As shown in figures 1, 2 and 2A, the fitting 1 preferably comprises more gaskets 7 and 9, for example O-rings, such that the fitting-pipe coupling is ensured to be leakproof. The gaskets 7 and 9 are housed in respective circular seats on the outer wall of the main body 2. Especially the gasket 9 is intended first of all to improve the seal of the fitting if scratches or machining errors, while extruding the pipe P, are formed in the inner wall of the pipe P itself.

Further, in the embodiment shown in figures 1, 2, 2A, the fitting 1 comprises an elastic element 6. The elastic element 6 is preferably a circlip elastically deformable in radial direction, that is a ring 6 that, under force action conditions, might be deformed in a reduced diameter configuration and return back in its initial configuration, due to a spring back when not anymore subjected to such a force. More preferably, the elastic element 6 is a "seeger" circlip, that is a ring provided with a lack (i.e. not having a length) that allows the deformation to a reduced diameter configuration. The seeger ring 6 is made of metal, for example steel, or brass. As better shown below, the ring 6 allows the connecting terminal member 3 to be permanently coupled to the main body 2.

The fitting 1 also comprises, among other things, gaskets 11 and 12, where the gasket 12 is arranged substantially in abutment against the stop wall 23 of the main body 2. The gasket 11 is arranged inside the connecting terminal member, preferably contacting the inner surface of the connecting terminal member. In more detail, the gasket 11 is arranged near the end of the connecting terminal member, preferably at a smoothed part 33 inside the connecting terminal member 3, the pipe-clamping ring 4 also abutting against the smoothed part 33.

The gaskets 11 and 12 are preferably formed by rubber O-rings and their function will be better described below. According to a possible embodiment, the gaskets 11 and 12 can be made of fluoroelastomers (FKM).

Referring to figure 1 the assembly steps of the fitting 1 on a pipe P will be hereinafter described, the assembly being carried out in several ways.

However, the first assembly step is always the same and requires the removal of a portion of the outer layer 10 made of polypropylene (PP) of the pipe P so that the portion of the intermediate layer 20 made of aluminum of the pipe P, at the end P1 of the pipe P facing the main body 2, is exposed.

The outer layer made of polypropylene is accurately removed, by using a calibrated tool, so that a portion of the intermediate layer made of aluminum having a predetermined length L, is exposed.

Further, following such operation, the outer layer 10 made of polypropylene is terminated in an edge P2 separated from the end P1 of the so-worked pipe P by the distance L.

The barbed portion 21 (i.e. provided with parallel barbed adapters) of the main body 2 of the fitting 1 is then inserted into the pipe P, until the wall 23 is moved in abutment against the end P1 of the pipe P, preferably by interposing the O-ring 12. The outer diameter of the barbed portion 21 is such as to allow it to be, even forcibly, inserted into the pipe P. In other words, the outer diameter of the barbed portion 21 almost corresponds to the inner diameter of the pipe P.

The O-ring 12, partly housed in an appropriated seat obtained on the wall 23 of the main body 2, is then pressed against the edge P1 of the pipe, in order to maximize the seal of the coupling against possible fluid leakages from the pipe P and prevent the fluid itself from penetrating through the layers of the pipe P, thereby impairing its integrity.

Moreover, the O-ring 11 is positioned such that, following the pipe assembly, it comes into abutment against the edge P2 of the pipe P constituted by the outer layer 10 made of polypropylene (PP).

The O-ring 11 is also contacting the layer 20 made of aluminum of the pipe P and the smoothed part 33 inside the connecting terminal member 3 in order to allow, by means of its position and by cooperating with said elements, an optimal seal inward the pipe, which is particularly advantageous when the fitting is installed in polluted terrains.

Finally, the connecting terminal member 3 is inserted on the abutting portion 22 of the main body 2 of the fitting. The connecting terminal member 3 and the main body 2 are concentric. As clearly shown in figures 1, 2, 2A, the outer diameter of the portion 22 of the fitting 1 approximately corresponds to the inner diameter of the connecting terminal member 3 such that the terminal member 3 can be "fitted" on the portion 22 by a minimum mechanical clearance.

The connecting terminal member 3 can slide over the main body 2 along a determined length in axial direction X, i.e. until an annular recess 24 of the main body 2 housing the seeger ring 6 is aligned with a corresponding annular recess 32 obtained on the inner surface of the terminal member 3. When the terminal member 3 is fitted on the body 2, the seeger circlip 6 is elastically deformed to its reduced diameter shape, being still entirely housed inside the recess 24. As the recess 32 of the connecting terminal member 3 is aligned with the recess 24 of the body 2, the seeger circlip at least partially snaps into the recess 32, i.e. it springs back due to an even partial change back to its initial diameter, and it is at least partially housed in the recess 32 thereby permanently and irreversibly coupling the connecting terminal member 3 to the main body 2.

By coupling the clamping element 5 to the terminal member 3, the assembly of the fitting 1 on the pipe P is completed.

This is accomplished by interposing the pipe-camping ring 4 between the outer surface of the pipe and the clamping nut 5.

Practically, the clamping element 5 is a threaded nut screwable on a portion of the terminal member 3 at least partially overlapping the pipe P over a determined length (figure 1).

As the nut 5 has been screwed on the terminal member 3, the pipe clamping ring 4 is clamped (pressed) against the surface of the pipe P. Preferably, the inner surface of the pipe-clamping ring 4 is threaded, or barbed, to seam the pipe P, i.e. to at least partially penetrate into the outer wall of the pipe P.

Figure 1 shows the fitting 1 assembled on the pipe P, having the nut 5 screwed on the terminal member 3 and the pipe-clamping ring 4 clamped against the surface of the pipe P. In this way, the stress applied by the nut 5 is transferred to the pipe P: the inner wall of the pipe P is therefore pressed against the barbed adapters of the main body 2 such that the barbs themselves partially or fully penetrate into the pipe P.

According to a modification of the assembly process, the connecting terminal member 3 can be previously inserted on the abutting portion 22 of the main body 2 of the fitting so that they become irreversibly coupled with one another.

Subsequent, the steps are:
- positioning the threaded element 5 on the pipe P;
- positioning the pipe-clamping ring 4 outside of the pipe P, in an intermediate position between the pipe P itself and the threaded nut;

- fitting the end portion P1 of the pipe P on the barbed portion 21 of the main body 2 up to bring it into abutment against the edge 23;
- screwing the threaded element 5 onto the connecting terminal member 3 to seam said pipe-clamping ring 4 to the outer surface of the pipe P.

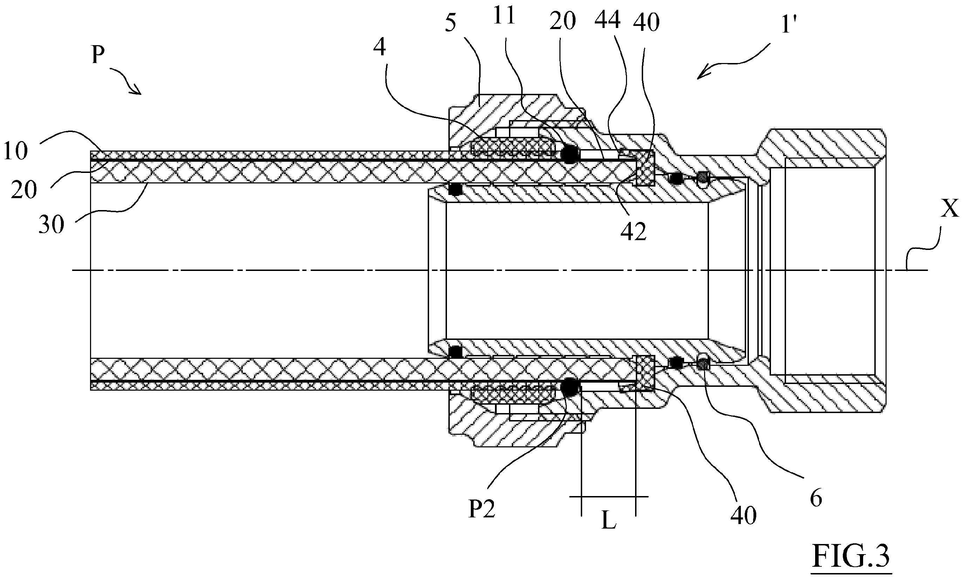

Figure 3 shows a side section of a further embodiment of the pipe fitting of the invention, globally referred to with the numeral 1'.

In this embodiment, the O-ring 12 is replaced by a lip seal 40, preferably made of polytetrafluoroethylene (PTFE) or nylon.

The lip seal 40 is positioned in abutment against the stop wall 23 of the main body 2 and has a surface 42 adapted to receive the abutting portion P1 of the pipe P.

In addition, the lip seal 40 has an annular projection 44 facing the pipe P.

Again, the first assembly step provides for the calibrated removal of a portion on the outer layer 10 so as to expose a predetermined length L of the intermediate layer 20 made of aluminum of the pipe P.

During the assembly of the pipe P, the surface 42 of the lip seal 40 is pressed against the edge P1 of the pipe, in order to maximize the seal of the coupling against possible fluid leakages from the pipe P and prevent the fluid itself from penetrating through the layers of the pipe P, thereby impairing its integrity.

Similarly to what described in relation to the embodiment of figures 1, 2, 2A, again, the O-ring 11 is positioned so as to come into abutment against the portion of the pipe P formed by the outer layer 10 made of polypropylene (PP).

Moreover, also in this case, the O-ring 11 is further contacting the layer 20 made of aluminum of the pipe P and the smoothed part 33 inside the connecting terminal member 3, thereby obtaining the previously described advantages concerning the inward seal of the pipe.

According to a further embodiment of the invention, not shown for simplicity, the lip seal 40 - described with reference to figure 3 - is always positioned in abutment against the stop wall 23 of the main body 2 and has a surface 42 adapted to receive in abutment the portion P1 of the pipe P, but the O-ring 11 is positioned such that one side thereof abuts against the annular projection 44 and the other side against the edge P2 of the pipe P constituted by the outer layer 10 made of polypropylene (PP) with quartz.

In addition, one side of the O-ring 11 contacts the inner surface of the connecting terminal member 3 and the other side contacts the surface made of aluminum exposed by the removal of the upper layer made of polypropylene of the pipe P. Obviously, modifications or improvements suggested by incidental or particular reasons can be made to the previously described invention, without thereby departing from the scope of the invention as claimed below.

## Claims

1. Process for assembling a multilayer pipe (P) inside a pipe fitting (1), where the multilayer pipe has an intermediate layer (20) made of aluminum that is arranged between an outer layer (10) and an inner layer (30) made of polymeric materials, where the process comprises at least the following steps:
- a) removing a portion of the outer layer (10) of the pipe (P) so that a portion of the intermediate layer (20) made of aluminum at one end (P1) of the pipe (P) and an edge (P2) of the outer layer (10) of the pipe (P) are both exposed;
- b) coupling the pipe with a barbed or threaded portion (21) of a main body (2) of the fitting (1);
- c) coupling irreversibly the main body (2) of the fitting (1) with a connecting threaded terminal member (3);
- d) positioning a threaded element (5) on the pipe (P);
- e) positioning a pipe-clamping ring (4) outside of the pipe (P), in an intermediate position between the pipe (P) itself and the threaded element (5);
- f) screwing the threaded element (5) on the connecting threaded terminal member (3) to seam the pipe-clamping ring (4) to the outer surface of the pipe (P) and to lead the edge (P2) of the outer layer (10) of the pipe (P) to contact a gasket (11) interposed between the exposed portion (20) made of aluminum of the pipe (P) and an inner surface of the connecting threaded terminal member (3).

2. Process according to claim 1, wherein the step b) and c) are carried out subsequently the steps d) and e).

3. Process according to claim 1 or 2, wherein the screwing step of the threaded element (5) leads the ending portion (P1) of the pipe (P) to contact a gasket (12) housed in an appropriate seat obtained on a wall (23) of the main body (2) of the fitting (1).

4. Process according to claim 1 or 2, wherein the screwing step of the threaded element (5) leads the edge (P2) of the outer layer (10) of the pipe (P) to contact the gasket (11) interposed between the exposed portion (20) made of aluminum of the pipe (P) and a smoothed part (33) inside the connecting terminal member (3).

5. Process according to claim 1 or 2, wherein the screwing step of the threaded element (5) leads the ending portion (P1) of the pipe (P) to contact a surface (42) of a lip seal (40).

6. Process according to claim 5, wherein the screwing step of the threaded element (5) leads the edge (P2) of the outer layer (10) of the pipe (P) to contact the gasket (11) interposed between the exposed portion (20) made of aluminum of the pipe (P) and an inner surface of the connecting terminal member (3), where the gasket (11) is contacting an annular projection (44) of the lip seal (40).

7. Process according to the preceding claims, wherein the inner layer (30) of the pipe (P) is made of polyethylene and the outer layer (10) comprises polypropylene.

8. Process according to the preceding claims, wherein the irreversible coupling of the main body (2) of the fitting (1) with the connecting terminal member (3) is carried out by an elastic element (6), preferably an elastically deformable circlip.

9. Process according to the preceding claims, wherein said main body (2) comprises two elements (2', 2").

10. Process according to claim 9, wherein the first element (2') of said two elements has a tubular shape having a substantially constant outer diameter and the second element (2") of said two elements has a substantially circular shape.

## Patentansprüche

1. Verfahren zur Montage eines mehrlagigen Rohres (P) innerhalb eines Rohrverbindungsstücks (1), wobei das mehrlagige Rohr eine aus Aluminium hergestellte Zwischenlage (20) aufweist die zwischen einer äußeren Lage (10) und einer inneren Lage (30), hergestellt aus Polymermaterialien, angeordnet ist, wobei das Verfahren wenigstens die folgenden Schritte umfasst:
- a) Entfernen eines Teils von der äußeren Lage (10) von dem Rohr (P), so dass ein Teil von der aus Aluminium hergestellten Zwischenlage (20) an einem Ende (P1) von dem Rohr (P) und eine Kante (P2) von der äußeren Lage (10) von dem Rohr (P) beide freigelegt werden;
- b) Verbinden des Rohrs mit einem gezackten oder gewindetragenden Bereich (21) von deinem Hauptkörper (2) von dem Verbindungsstück (1);
- c) irreversibles Verbinden des Hauptkörpers (2) von dem Verbindungsstück (1) mit einem gewindetragenden Endverbindungsteil (3);
- d) Anordnen eines gewindetragenden Elements (5) an dem Rohr (P);
- e) Anordnen eines Rohrklemmrings (4) außen an das Rohr (P), in einer Zwischenposition zwischen dem Rohr (P) selbst und dem gewindetragenden Element (5);
- f) Schrauben des gewindetragenden Elements (5) an das gewindetragende Endverbindungsteil (3) um den Rohrklemmring (4) mit der äußeren Oberfläche von dem Rohr (P) zu verbinden und um die Kante (P2) von der äußeren Lage (10) von dem Rohr (P) in Kontakt mit einer zwischen dem aus Aluminium hergestellten freigelegten Bereich (20) von dem Rohr (P) und einer inneren Oberfläche von dem gewindetragenden Endverbindungsteil (3) eingefügten Dichtung (11) zu führen.

2. Verfahren nach Anspruch 1, wobei die Schritte b) und c) nachfolgend zu den Schritten d) und e) ausgeführt werden.

3. Verfahren nach Anspruch 1 oder 2, wobei der Schritt des Schraubens von dem gewindetragenden Element (5) dazu führt, dass der Endbereich (P1) von dem Rohr (P) eine in einem geeigneten Sitz an einer Wandung (23) von dem Hauptkörper (2) von dem Verbindungsstück (1) untergebrachte Dichtung (12) berührt.

4. Verfahren nach Anspruch 1 oder 2, wobei der Schritt des Schraubens von dem gewindetragenden Element (5) dazu führt, dass die Kante (P2) von dem Rohr (P) die zwischen dem aus Aluminium hergestellten freigelegten Bereich (20) von dem Rohr (P) und einem Übergangsteil (33) innerhalb des Endverbindungsteils (3) angeordnete Dichtung (11) berührt.

5. Verfahren nach Anspruch 1 oder 2, wobei der Schritt des Schraubens von dem gewindetragenden Element (5) dazu führt, dass der Endbereich (P1) von dem Rohr (P) eine Oberfläche(42) von einer Lippendichtung (40) berührt.

6. Verfahren nach Anspruch 5, wobei der Schritt des Schraubens von dem gewindetragenden Teil (5) dazu führt, dass die Kante (P2) von der äußeren Lage (10) von dem Rohr (P) die zwischen dem aus Aluminium hergestellten freigelegten Bereich (20) von dem Rohr (P) und einer inneren Oberfläche von dem Endverbindungsteil (3) angeordnete Dichtung (11) berührt, wobei die Dichtung (11) einen ringförmigen Vorsprung (44) von der Lippendichtung (40) berührt.

7. Verfahren nach den vorherigen Ansprüchen, wobei die innere Lage (30) von dem Rohr (P) aus Polyethylen hergestellt ist und die äußere Lage (10) Polypropylen umfasst.

8. Verfahren nach den vorherigen Ansprüchen, wobei das irreversible Verbinden von dem Hauptkörper (2) von dem Verbindungsstück (1) mit dem Endverbindungsteil (3) ausgeführt wird durch ein elastisches Element (6), vorzugsweise durch eine elastisch verformbaren Sicherungsring.

9. Verfahren nach den vorherigen Ansprüchen, wobei der Hauptkörper (2) zwei Elemente (2', 2") umfasst.

10. Verfahren nach Anspruch 9, wobei das erste Element (2') der zwei Elemente eine Röhrenform mit einem im Wesentlichen konstanten äußeren Durchmesser aufweist und das zweite Element (2") der zwei Elemente eine im Wesentlichen runde Form aufweist.

## Revendications

1. Procédé pour assembler un tuyau multicouche (P) à l'intérieur d'un raccord de tuyau (1), où le tuyau multicouche a une couche intermédiaire (20) réalisée en aluminium qui est agencée entre une couche externe (10) et une couche interne (30) réalisées en matériaux polymériques, où le procédé comprend au moins les étapes suivantes :
- a) le retrait d'une portion de la couche externe (10) du tuyau (P) de sorte qu'une portion de la couche intermédiaire (20) réalisée en aluminium à une extrémité (P1) du tuyau (P) et un bord (P2) de la couche externe (10) du tuyau (P) soient tous deux exposés ;
- b) l'accouplement du tuyau à une portion barbelée ou filetée (21) d'un corps principal (2) du raccord (1) ;
- c) l'accouplement irréversible du corps principal (2) du raccord (1) à un organe terminal fileté de raccordement (3) ;
- d) le positionnement d'un élément fileté (5) sur le tuyau (P) ;
- e) le positionnement d'une bague de serrage de tuyau (4) à l'extérieur du tuyau (P), dans une position intermédiaire entre le tuyau (P) lui-même et l'élément fileté (5) ;
- f) le vissage de l'élément fileté (5) sur l'organe terminal fileté de raccordement (3) pour joindre la bague de serrage de tuyau (4) à la surface externe du tuyau (P) et pour mener le bord (P2) de la couche externe (10) du tuyau (P) à entrer en contact avec un joint d'étanchéité (11) interposé entre la portion exposée (20) réalisée en aluminium du tuyau (P) et une surface interne de l'organe terminal fileté de raccordement (3).

2. Procédé selon la revendication 1, dans lequel les étapes b) et c) sont réalisées ultérieurement aux étapes d) et e).

3. Procédé selon la revendication 1 ou 2, dans lequel l'étape de vissage de l'élément fileté (5) mène la portion de fin (P1) du tuyau (P) à entrer en contact avec un joint d'étanchéité (12) logé dans un siège approprié obtenu sur une paroi (23) du corps principal (2) du raccord (1).

4. Procédé selon la revendication 1 ou 2, dans lequel l'étape de vissage de l'élément fileté (5) mène le bord (P2) de la couche externe (10) du tuyau (P) à entrer en contact avec le joint d'étanchéité (11) interposé entre la portion exposée (20) réalisée en aluminium du tuyau (P) et une partie lissée (33) à l'intérieur de l'organe terminal de raccordement (3).

5. Procédé selon la revendication 1 ou 2, dans lequel l'étape de vissage de l'élément fileté (5) mène la portion de fin (P1) du tuyau (P) à entrer en contact avec une surface (42) d'un joint à lèvre (40).

6. Procédé selon la revendication 5, dans lequel l'étape de vissage de l'élément fileté (5) mène le bord (P2) de la couche externe (10) du tuyau (P) à entrer en contact avec le joint d'étanchéité (11) interposé entre la portion exposée (20) réalisée en aluminium du tuyau (P) et une surface interne de l'organe terminal de raccordement (3), où le joint d'étanchéité (11) entre en contact avec une protubérance annulaire (44) du joint à lèvre (40).

7. Procédé selon les revendications précédentes, dans lequel la couche interne (30) du tuyau (P) est réalisée en polyéthylène et la couche externe (10) comprend du polypropylène.

8. Procédé selon les revendications précédentes, dans lequel l'accouplement irréversible du corps principal (2) du raccord (1) à l'organe terminal de raccordement (3) est réalisé par un élément élastique (6), de préférence un anneau de retenue élastiquement déformable.

9. Procédé selon les revendications précédentes, dans lequel ledit corps principal (2) comprend deux éléments (2', 2").

10. Procédé selon la revendication 9, dans lequel le premier élément (2') desdits deux éléments a une forme tubulaire ayant un diamètre externe sensiblement constant et le second élément (2") desdits deux éléments a une forme sensiblement circulaire.
